Europäisches Patentamt

European Patent Office

Office européen des brevets

(19)

(11) **EP 1 400 390 A2**

(12) **EUROPEAN PATENT APPLICATION**

(43) Date of publication:
   **24.03.2004 Bulletin 2004/13**

(51) Int Cl.$^7$: **B60K 23/08**

(21) Application number: **03020530.6**

(22) Date of filing: **16.09.2003**

(84) Designated Contracting States:
   **AT BE BG CH CY CZ DE DK EE ES FI FR GB GR
   HU IE IT LI LU MC NL PT RO SE SI SK TR**
   Designated Extension States:
   **AL LT LV MK**

(30) Priority: **17.09.2002 JP 2002270287**

(71) Applicant: **FUJI JUKOGYO KABUSHIKI KAISHA
   Tokyo (JP)**

(72) Inventors:
   • **Nagura, Tatsunori, Fuji Jukogyo K.K
     Tokyo (JP)**
   • **Inoue, Kouichi, Fuji Jukogyo K.K
     Tokyo (JP)**
   • **Nitta, Ryo, Fuji Jukogyo K.K
     Tokyo (JP)**

(74) Representative: **VOSSIUS & PARTNER
   Siebertstrasse 4
   81675 München (DE)**

(54) **Power distribution control apparatus for four wheel drive vehicle**

(57)    When vehicle behavior control systems such as VDC, TCS, ABS and the like are operative, a front-rear power distribution control apparatus for a four wheel drive vehicle can have an excellent convergence characteristic in vehicle behavior control by choosing a transfer clutch torque from a region of a predetermined table in which the power distribution control does not interfere with the behavior control of the vehicle behavior control system and by establishing the transfer clutch torque to a larger value with an increase of transfer input torque. When the vehicle is in an understeer or oversteer tendency, the convergence of vehicle behavior is further enhanced by correcting the transfer clutch torque in an increasing or decreasing direction.

FIG.2

```
                    ┌──────────┐
                    │  START   │
                    └────┬─────┘
                         │
              ┌──────────────────┐
              │  SIGNALS INPUT   │──S101
              └────────┬─────────┘
                       │
              ┌──────────────────┐
              │ CALCULATE TRANSFER│──S102
              │  INPUT TORQUE    │
              └────────┬─────────┘
                       │
         S103 ┌────────────────┐   Yes
              │ VDC, TCS OR ABS │──────────┐
              │  OPERATIVE ?    │          │
              └────────┬────────┘          │
                    No │                    │
         S104 ┌────────────────┐   ┌──────────────────────┐
              │CALCULATE TRANSFER│  │ CALCULATE TRANSFER CLUTCH│──S106
              │CLUTCH TORQUE    │   │ TORQUE WHEN BEHAVIOR   │
              └────────┬────────┘   │ CONTROL OPERATIVE      │
                       │            └──────────┬───────────┘
                       │                       │
                       │         ┌──────────────────┐  Yes   S108
                       │         │ |Δγ| LARGER THAN  │──────┐
                       │    S107 │ SPECIFIED VALUE ?  │   ┌──────────────┐
                       │         └─────────┬─────────┘   │CORRECT TRANSFER│
                       │                 No│             │CLUTCH TORQUE  │
                       │                   │             └──────────────┘
              ┌──────────────────┐
              │ ESTABLISH HYDRAULIC│──S105
              │ PRESSURE INDICATING│
              │ VALUE            │
              └────────┬─────────┘
                    ┌──────────┐
                    │  RETURN  │
                    └──────────┘
```

EP 1 400 390 A2

## Description

The present invention relates to a power distribution control apparatus for a four wheel drive vehicle and more particularly to a power distribution control apparatus having miscellaneous control apparatuses for controlling behaviors of the vehicle by means of a traction control, a braking force control and the like.

In recent years, some vehicles incorporate various vehicle behavior control apparatuses in order to control behaviors of the vehicles during traveling. For example, the VDC (Vehicle Dynamics Control System) is a vehicle behavior control apparatus for producing an understeer tendency or an oversteer tendency according to steering angles by controlling braking force or engine output power in order to stabilize behaviors of a vehicle during turning. Further, the TCS (Traction Control System) is a vehicle behavior control apparatus for inhibiting wheel spins caused by excessive driving force based on a reduced output torque control of an engine, an increased brake fluid pressure control and the like in order to secure driving force with a direction stability retained. Further, the well-known ABS (Antilock Brake System) is a vehicle behavior control apparatus for controlling a wheel slippage ratio within a target value in order to prevent skidding at braking.

In case where such vehicle behavior control apparatuses are mounted on four wheel drive vehicles, these vehicle behavior control apparatuses sometimes interfere with miscellaneous controls by power distribution control apparatuses of the four wheel drive vehicles. For example, when the TCS operates in response to slips of front wheels on a road surface with low friction coefficient such as a snowy road, as a result the power distribution control apparatus operates so as to increase the distribution of driving force to rear wheels. In such a case, generally, there occurs a discrepancy between inputted vehicle speeds and actual vehicle speeds and as a result the TCS loses proper controls. Similar interferences may occur in other vehicle behavior control apparatuses such as ABS, VDC and the like.

In order to prevent such interferences, generally, when the vehicle behavior control apparatuses such as TCS, ABS, VDC and the like operate, the torque transfer of the power distribution control apparatus is cut off or is controlled so as to reduced to a specified minimum value.

For example, JP-A-61-37541 discloses a technology in which, when slip controls operate, the four wheel drive is forcedly changed over to the two wheel drive.

However, when the torque transfer is cut off or restricted to the specified minimum value at the operation of the vehicle behavior control apparatuses, sometimes the vehicle behavior has an inadequate convergence, for example, when excessive torque is generated by a driver's sudden depression of the accelerator pedal at starting on snowy roads, the TCS can not control such excessive torque and as a result the excessive torque is transmitted to either front wheels or rear wheels and the vehicle behavior control has a poor convergence.

It is an object of the present invention to provide a power distribution control apparatus for a four wheel drive vehicle capable of enhancing the convergence of vehicle behaviors when the vehicle behavior control apparatus is operative.

A power distribution control apparatus of a four wheel drive vehicle for controlling a power distribution ratio between front and rear wheels, said apparatus having a transfer having at least one vehicle behavior control means for controlling behaviors of said vehicle, comprisesfriction clutch means, power distribution control means for changing the power distribution ratio by varying a torque transmission capacity of the friction clutch means and torque transmission capacity control means for controlling the torque transmission capacity so as to come into a preestablished region for avoiding a control interference with the vehicle behavior control means and further controlling the torque transmission capacity so as to become larger with an increase of input torque of the transfer. The torque transmission capacity control means correct the torque transmission capacity so as to increase power to be distributed to the front wheels when the vehicle is in an oversteer tendency and so as to increase power to be distributed to the rear wheels when the vehicle is in an understeer tendency.

Fig. 1 is a functional block diagram showing an overall construction of a power distribution control apparatus according to an embodiment of the present invention;
Fig. 2 is a flowchart showing a routine for a front and rear driving force distribution control;
Fig. 3 is a table showing a relationship between engine torque and friction loss;
Fig. 4 is a table showinga relationship between transfer input torque and transfer clutch torque; and
Fig. 5 is a table showing a relationship between yaw rate deviation and transfer clutch torque correction amount.

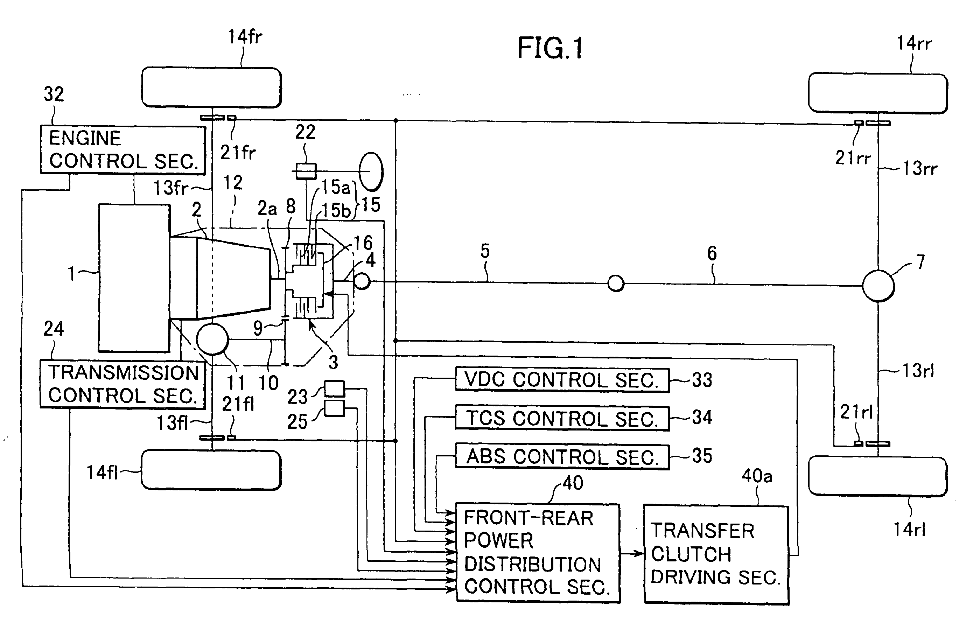

Referring now to Fig. 1, reference numeral 1 denotes an engine disposed in a front part of a vehicle, from which driving force is transmitted to a transfer 3 through an automatic transmission (including a torque converter) 2 and a transmission output shaft 2a.

The driving force transmitted to the transfer 3 inputs to a rear final reduction gear unit 7 through a rear drive shaft 4, a propeller shaft 5 and a rear drive pinion shaft 6 and on the other hand the driving force inputs to a front final reduction gear unit 11 through a reduction drive gear 8, a reduction driven gear 9 and a front drive shaft (front drive pinion shaft) 10. The automatic transmission 2, the transfer 3 and the front wheel final reduction gear unit 11 are integrally accommodated in a housing 12.

The driving force inputted to the rear final reduction gear unit 7 is transmitted to a rear left wheel 14rl and a rear right wheel 14rr through a rear left drive axle 13rl and a rear right drive axle 13rr, respectively. On the other hand, the driving force inputted to the front final reduction gear unit 11 is transmitted to a front left wheel 14fl and a front right wheel 14fr through a front left drive axle 13fl and a front right drive axle 13fr, respectively.

The transfer 3 is constituted by a wet multiple disc clutch (transfer clutch) 15 and a transfer piston 16 for changing engagement force (transfer clutch torque) of the transfer clutch 15 to variably control a torque transmission capacity thereof. The transfer clutch 15 comprises a clutch drum fixed to the rear drive shaft 4, a plurality of axially spaced drive plates 15a fixed to the clutch drum, and a plurality of axially spaced driven plates 15b disposed in an interleaving relation to the drive plates 15a and mounted on a clutch hub fixed to a reduction drive gear in an axially displaceable manner. Accordingly, the vehicle incorporating the transfer 3 forms a four wheel drive vehicle capable of changing torque distribution ratios between front and rear wheels within a range from 100:0 to 50:50 by controlling transfer clutch torque of the transfer clutch 15.

The pressure of the transfer piston 16 is supplied from a transfer clutch driving section 40a having a plurality of solenoid valves and hydraulic circuits. Control signals for driving the transfer clutch driving section 40a is outputted from a front-rear power distribution control section 40.

Further, the vehicle according to the embodiment incorporates a VDC (Vehicle Dynamic Control) control section 33, a TCS (Traction Control System) control section 34 and an ABS (Antilock Brake System) control section 35 as known vehicle behavior control means.

The VDC control section 33 performs a brake control or an engine power control as desired based on the comparison of driver's operating conditions (target behavior) calculated from steering angle, brake fluid pressure, engine output and the like with traveling conditions of an own vehicle (actual behavior) calculated from yaw rate, forward and backward acceleration, lateral acceleration, wheel speeds and the like.

Further, the TCS control section 34 performs a brake control for individual wheels or an engine power control in order to maintain an optimum driving force and an appropriate side force when slippage of driving wheels exceeds a threshold value.

Further, an ABS control section 35 performs a brake fluid pressure control for individual wheels in order to maintain an optimum braking force and an appropriate side force when slippage of braking wheels exceeds a threshold value.

The front-rear power distribution control section 40 inputs signals indicative of operating conditions from the VDC control section 33, the TCS control section 34 and the ABS control section 35. Further, the front-rear power distribution control section 40 inputs miscellaneous signals such as wheel speeds $\omega$ fl, $\omega$fr, $\omega$rl, $\omega$rr, steering wheel rotation angles $\theta$H, yaw rate $\gamma$, engine speeds Ne and engine torque Te, gear ratios I (transmission speeds) and estimated road friction coefficients $\mu$ e from wheel speed sensors 21fl, 21fr, 21rl, 21rr, a steering wheel rotation angle sensor 22, a yaw rate sensor 23, an engine control section 32, a transmission control section 24 and a road friction coefficient estimating apparatus 25, respectively.

Further, when the vehicle behavior control sections 33, 34, 35 are inoperative, the front-rear power distribution control section 40 calculates a torque sensitive torque Tt, a differential sensitive torque Ts and a yaw rate feedback torque Ty based on respective input signals and calculates a transfer clutch torque Ttr from these torque data.

Specifically, a preestablished power distribution ratio Ai for each transmission speed of rear wheels is selected and the torque sensitive torque Tt is calculated from the power distribution ratio of the rear wheels and a transfer input torque Ti.

$$Tt = Ai \cdot Ti \qquad (1)$$

Then, the calculated torque sensitive torque Tt is corrected by a steering angle $\delta$f (= $\theta$H /n: n is steering gear ratio) and vehicle speeds V (for example, calculated from average wheel speeds $\omega$ fl, $\omega$fr, $\omega$rl, $\omega$rr).

The transfer input torque Ti is calculated from engine torque Te, gear ratio I and friction loss Lf of the automatic transmission 2 as follows.

$$Ti = (Te \cdot I) - Lf \qquad (2)$$

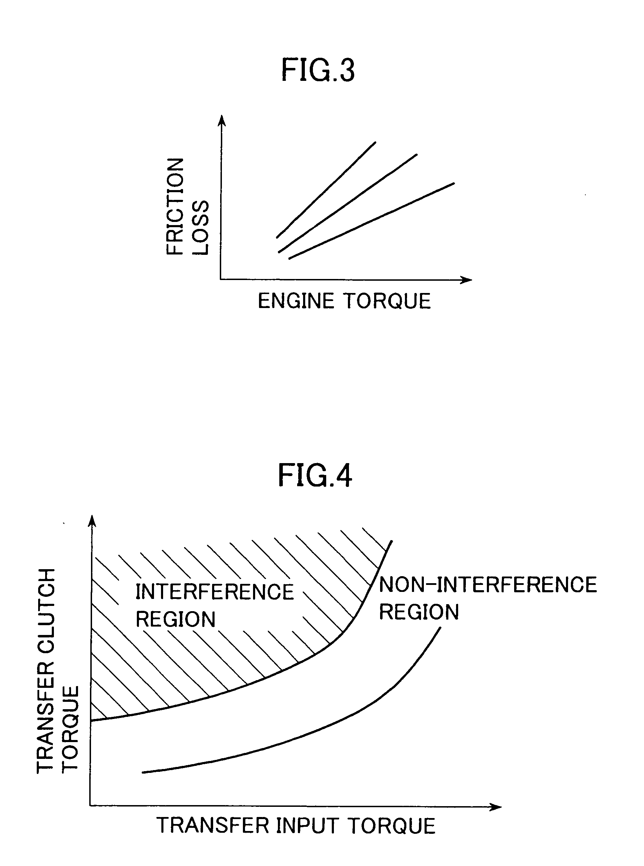

In this case, the friction loss Lf is obtained by reference to a table showing the relationship between engine torque and friction losses parameterizing transmission gear ratios (refer to Fig. 3). The relationship between engine torque and friction loss is obtained by experiments beforehand.

Further, in the front-rear power distribution control section 40, the differential sensitive torque Ts is calculated from the respective wheel speeds $\omega$fl, $\omega$fr, $\omega$rl, $\omega$rr, steering wheel rotation angle $\theta$H and transfer input torque Ti.

$$Ts = KTi \cdot (\Delta N - \Delta N0) \qquad (3)$$

Where $\Delta$N is a difference between front wheel rotation speed $\omega$ f (= $\omega$fl + $\omega$fr) and $\omega$r (= $\omega$rl + $\omega$rr), that is, $\Delta$N =$\omega$r - $\omega$ r; $\Delta$N0 is a differential mechanically produced by steering angle $\delta$f and vehicle speed V and is calculated from a vehicle model; Kti is a proportional factor established by the transfer input torque Ti and is established such that as the transfer input torque Ti is large, the differential is smaller.

Further, the yaw rate feedback torque Ty is adjusted in such a manner that the target yaw rate $\gamma$'agrees with the actual yaw rate $\gamma$. That is, first a yaw rate deviation $\Delta\gamma$ (= $\gamma$ - $\gamma$') is calculated from the target yaw rate $\gamma$' and the actual yaw rate $\gamma$ and then the yaw rate feedback torque Ty is established so as to eliminate the yaw rate deviation $\Delta\gamma$.

Thus, in the front-rear power distribution control section 40, the transfer clutch torque Ttr is calculated as follows using the calculated torque sensitive torque Tt, differential sensitive torque Ts and yaw rate feedback torque Ty.

$$Ttr = Tt + Ts + Ty \qquad (4)$$

A signal indicative of hydraulic pressure corresponding to the transfer clutch torque Ttr and is sent to the transfer clutch driving section 40a.

On the other hand, when either of the vehicle behavior control section 33, 34, 35 is operative, the transfer clutch torque Ttr is established so as to be able to avoid interference with the vehicle behavior control section in operation.

Specifically, the front-rear power distribution section 40 has tables for establishing a transfer clutch torque according to a transfer input torque when the VDC control section 33, the TCS control section 34 or the ABS control section 35 operate.

In this embodiment, as shown in Fig. 4, a region of transfer clutch torque in which an interference with the VDC control can be avoided is established beforehand by experiments or other means. In this non-interference region, the transfer clutch torque Ttr is established to be larger as the transfer input torque becomes large. That is, in case where the transfer input torque Ti is large, the effect of the transfer clutch torque on the VDC control becomes relatively small and therefore the non-interference region is enlarged. Further, when the VDC control is operative, in order to control the front-rear power distribution ratio in the vicinity of an appropriate distribution ratio for the improvement of convergence of vehicle behavior, it is necessary to establish the transfer clutch torque Ttr to a larger value as the transfer input torque Ti becomes large. The table shown in Fig. 4 has been established in view of these situations.

Similarly, tables (not shown) for establishing the transfer clutch torque Ttr when the TCS control and/ or the ABS control are operative are accommodated in the front-rear power distribution section 40.

Further, in the front-rear power distribution control section 40, when either of the vehicle behavior control sections 33, 34 and 35 is operative and when an absolute value $|\Delta\gamma|$ of the deviation of target yaw rate from actual yaw rate is larger than a specified value, the established transfer clutch torque Ttr is corrected in an increasing or decreasing direction.

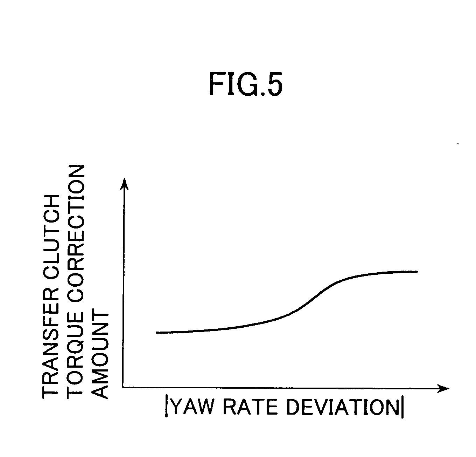

Specifically, for example, as shown in Fig. 5, when a vehicle shows such a behavior that the absolute value $|\Delta\gamma|$ of the yaw rate deviation exceeds a specified value (that is, when the vehicle shows a behavior having an excessive understeer tendency or having an excessive oversteer tendency), the transfer clutch torque Ttr is corrected by reference to a table obtained from experiments beforehand. In this case, the correction amount is established so as to increase with an increase of the absolute value $|\Delta\gamma|$ of the yaw rate deviation. When a behavior of under steer tendency is detected, in order to converge such a behavior, the transfer clutch torque Ttr is corrected so as to increase the power distribution on the rear wheel side and when a behavior of oversteer tendency is detected, in order to converge such a behavior, the transfer clutch torque Ttr is corrected so as to increase the power distribution on the front wheel side. It is needless to say that the correction of the transfer clutch torque Ttr is performed so as to come in the non-interference region.

Similarly, tables (not shown) for correcting the transfer clutch torque Ttr when the TCS control and/or the ABS control are operative are accommodated in the front-rear power distribution section 40.

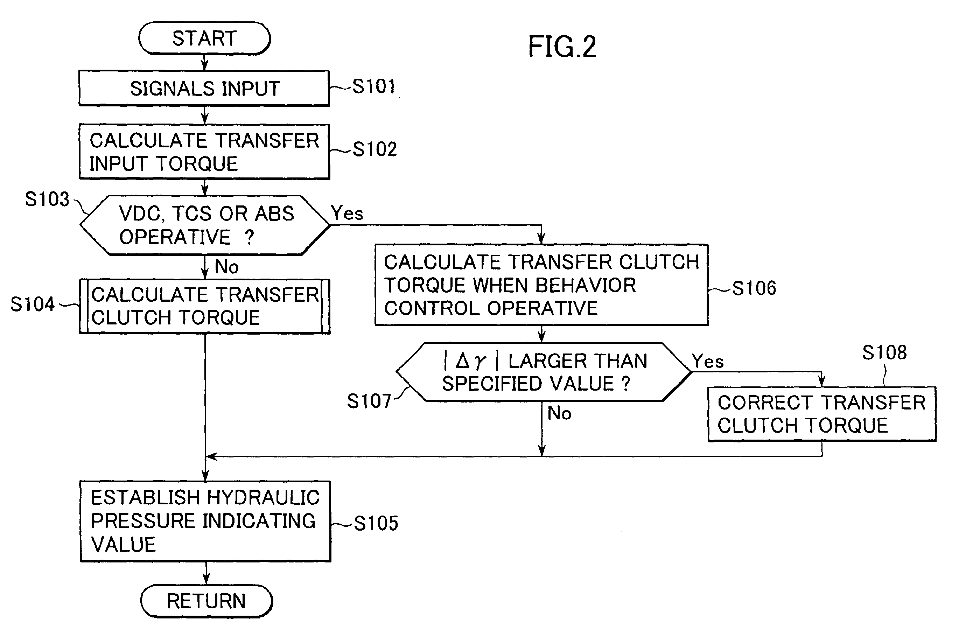

Next, the front-rear power distribution control carried out in the front-rear power distribution control section 40 will be described by reference to a flowchart shown in Fig. 2. The program is executed at a specified interval of time.

First, at a step S101, necessary signals are read and then the program goes to a step S102 where a friction loss Lf of the automatic transmission at the present gear ratio is obtained from an engine torque Te by referring to a table and a transfer input torque Ti is calculated from the engine torque Te, a gear ratio and the friction loss Lf.

Then, at a step S103, it is checked whether or not either of the VDC control section 33, the TCS control section 34 and the ABS control section 35 is operative.

If it is judged at the step S103 that neither of the VDC control section 33, the TCS control section 34 and the ABS control section 35 is operative, the program goes to a step S104 where a torque sensitive torque Tt, a differential sensitive torque Ts and a yaw rate feedback torque Ty are calculated respectively and a transfer clutch torque Ttr is calculated based on these torque values. After that, the program goes to a step S105 where a hydraulic indicating value corresponding to the calculated transfer clutch torque Ttr is established and the program leaves the routine after the hydraulic indicating value controls the transfer clutch driving section 40a.

On the other hand, if it is judged at the step S103 that either of the VDC control section 33, the TCS control section 34 and the ABS control section 35 is operative, the program goes to a step S106 where the front-rear power distribution control section 40 establishes a transfer clutch torque Ttr in the respective non-interference regions of the vehicle behavior control sections in the table.

After that, the program goes to a step S107 where it is judged whether or not the absolute value $|\Delta\gamma|$ of the yaw rate deviation when at least one of the VDC control section 33, the TCS control section 34 or the ABS control section 35 is operative, is larger than a specified value.

At a step S107, if it is judged that the absolute value $|\Delta\gamma|$ is smaller than a specified value, the program goes to a step S105 where the transfer clutch torque Ttr established at the step S106 is established to a hydraulic indicating value as it is. After the established hydraulic indicating value controls the transfer clutch driving section 40a, the program leaves the routine.

On the other hand, at the step S107, if it is judged that the absolute value $|\Delta\gamma|$ is larger than a specified value, the program goes to a step S108 where the correction quantity of the transfer clutch torque is established based on $|\Delta\gamma|$ by referring to the table shown in Fig. 5. When the vehicle behavior is in an understeer tendency, the transfer clutch torque is increased by that established correction quantity and when the vehicle behavior is in an oversteer tendency, the transfer clutch torque is reduced by that established correction quantity. After that, the program goes to a step S105 where an established hydraulic indicating value corresponding to the corrected transfer clutch torque is sent to the transfer clutch control section 40a, leaving the routine.

Thus, according to the embodiment of the present invention, when other vehicle behavior controls are operative, since the transfer clutch torque Ttr is selected from the region having no interference with other vehicle behavior controls and is established to a larger value as the transfer input torque Ti is large, the transfer 3 according to the embodiment can realize an excellent convergence in vehicle behavior control.

Further, when the vehicle detects an understeer tendency or oversteer tendency, the convergence in vehicle behavior control can be enhanced by appropriately increasing or decreasing the transfer clutch torque Ttr.

The power distribution control according to the aforesaid embodiment is exemplified in the four wheel drive vehicle capable of varying the front to rear distribution ratio from 100 : 0 (front drive vehicle) to 50 : 50, however the principle of the present invention is not restricted to such four wheel drive vehicle. For example, the present invention may be applied to a four wheel drive vehicle incorporating a planetary gear train designed so as to have an unequal torque distribution ratio between front and rear wheels and having a transfer capable of varying the torque distribution ratio within a range from a specified design value to 50:50.

The entire contents of Japanese Patent Application No. Tokugan 2002-270287 filed September 17, 2002, is incorporated herein by reference.

While the present invention has been disclosed in terms of the preferred embodiment in order to facilitate better understanding of the invention, it should be appreciated that the invention can be embodied in various ways without departing from the principle of the invention. Therefore, the invention should be understood to include all possible embodiments which can be embodied without departing from the principle of the invention set out in the appended claims.

**Claims**

1. A power distribution control apparatus of a four wheel drive vehicle for controlling a power distribution ratio between front and rear wheels, said apparatus having a transfer having at least one vehicle behavior control means for controlling behaviors of said vehicle, comprising:

   friction clutch means;
   power distribution control means for changing said power distribution ratio by varying a torque transmission capacity of said friction clutch means; and
   torque transmission capacity control means for controlling said torque transmission capacity so as to come within a preestablished region for avoiding a control interference with said vehicle behavior control means and further controlling said torque transmission capacity so as to become larger with an increase of input torque of said transfer.

2. The power distribution control apparatus according to claim 1, **characterized in that** said torque transmission capacity control means correct said torque transmission capacity so as to increase power to be distributed to said front wheels when said vehicle is in an oversteer tendency and so as to increase power to be distributed to said rear wheels when said vehicle is in an understeer tendency.

FIG.1

ENGINE CONTROL SEC.

TRANSMISSION CONTROL SEC.

VDC CONTROL SEC.

TCS CONTROL SEC.

ABS CONTROL SEC.

FRONT-REAR POWER DISTRIBUTION CONTROL SEC.

TRANSFER CLUTCH DRIVING SEC.

EP 1 400 390 A2

# FIG.2

START

SIGNALS INPUT — S101

CALCULATE TRANSFER INPUT TORQUE — S102

S103 — VDC, TCS OR ABS OPERATIVE ? — Yes

No

S104 — CALCULATE TRANSFER CLUTCH TORQUE

CALCULATE TRANSFER CLUTCH TORQUE WHEN BEHAVIOR CONTROL OPERATIVE — S106

$|\Delta\gamma|$ LARGER THAN SPECIFIED VALUE ? — Yes

S107

No

S108

CORRECT TRANSFER CLUTCH TORQUE

ESTABLISH HYDRAULIC PRESSURE INDICATING VALUE — S105

RETURN

# FIG.3

FRICTION LOSS

ENGINE TORQUE

# FIG.4

TRANSFER CLUTCH TORQUE

INTERFERENCE REGION

NON-INTERFERENCE REGION

TRANSFER INPUT TORQUE

# FIG.5

TRANSFER CLUTCH TORQUE CORRECTION AMOUNT

|YAW RATE DEVIATION|